# EUROPEAN PATENT SPECIFICATION

(11) **EP 2 095 048 B1**
(45) Date of publication and mention of the grant of the patent: **21.08.2019**
(21) Application number: 07857471.2
(22) Date of filing: 12.12.2007
(51) Int. Cl.: F26B 3/08, F26B 21/14

(54) **PROCESS AND APPARATUS FOR DRYING A POLYMER**
VERFAHREN UND VORRICHTUNG ZUM TROCKNEN EINES POLYMERS
PROCÉDÉ ET APPAREIL POUR LE SÉCHAGE D'UN POLYMÈRE

(30) Priority: 29.12.2006 EP 06127348
(43) Date of publication of application: 02.09.2009
(73) Proprietor: Basell Poliolefine Italia S.r.l., 20121 Milano (IT)
(72) Inventor: PENZO, Giuseppe, I-46047 Montanara Di Curtatone, Mantova (IT); RINALDI, Roberto, I-46100 Mantova (IT)
(74) Representative: Sacco, Marco
(86) International application number: PCT/EP2007/063808
(87) International publication number: WO 2008/080788

(56) References cited:
- BE-A- 680 474
- FR-A- 1 352 614
- FR-A- 1 478 224
- GB-A- 873 832
- GB-A- 1 178 252
- US-A- 2 668 041
- US-A- 2 728 642
- US-A- 3 529 359
- US-A- 5 119 570
- US-A- 5 199 184
- US-A- 5 797 989
- US-A- 5 797 989

## Description

The invention relates to a process and apparatus for drying polymer particles with a high efficiency and low residence times.

In particular, the invention relates to a process and apparatus for drying polyolefin granules in the finishing section of a polymerization plant for the olefin polymerization.

The use of catalysts with high activity and selectivity of the Ziegler-Natta type and, more recently, of the metallocene type has led to the widespread use on an industrial scale of processes in which the olefin polymerization is carried out in a liquid-phase or a gas-phase in the presence of a solid catalyst. A Ziegler-Natta catalyst comprises a solid catalytic component based on a transition metal compound, such as a titanium tetrachloride, and an organometallic compound acting as the catalyst activator, such as an aluminium alkyl compound.

Several reactions for polymerizing different olefins may be catalyzed by a Ziegler-Natta catalyst, thus producing homopolymers, copolymers or terpolymers. The obtained polymers contain residues of catalyst components, a certain quantity of unreacted monomers and other volatile compounds.

Moreover, when the olefin polymerization is carried out in the gas-phase, the presence of inert gases, such as propane, isobutane, isopentane or other saturated aliphatic hydrocarbons, has mainly the function of contributing to dissipate the heat generated inside the reactor from the polymerization reaction. Even these alkanes of low volatility may remain occluded and dissolved in the polyolefins particles.

For safety, economical and ecological reasons, there is the need to remove the unreacted (co)monomers, the organic compounds and alkanes of relatively low volatility from the produced polyolefin. All these compounds constitute a load on the environment, some of them are capable of forming explosive mixtures in the presence of atmospheric oxygen. Unconverted monomers represent also a risk of prolongation of uncontrolled residual polymerization outside the polymerization reactor. Moreover, the removal of unreacted monomers from the polymer allows their recovery and recycle to the polymerization reactor, thus saving the consumption of raw materials.

The removal of the above volatile compounds from the polymer is also necessary to obtain high quality polymer granules to be subjected to extrusion and pelletization, and also because the presence of such compounds into the polymers requires higher safety precautions for the downstream processes. Some catalyst components might react with air, water and additives, also with violent reactions, forming dangerous compounds, and possibly affecting the odor and the color of the obtained polymeric products.

Some processes are known for treating polymers with nitrogen and/or steam to remove the unreacted monomers and other volatile compounds from the polymer particles discharged from the reactor.

For example US 4,731,438 teaches a method for treating polymers by using a stream of N₂ and water, in which the stripping agent is essentially N₂, while water has the function of deactivating the catalyst residues. A polymer is introduced at the top of a vertical vessel, so as to form a polymer bed descending through the vessel in plug flow conditions. The nitrogen stream containing water is fed to the bottom of the vertical vessel. By strictly controlling the operating conditions and the moisture inside the vessel, it is possible to establish and maintain a moisture front inside the polymer bed: below this moisture front the water concentration in the carrier gas is nearly equal to its inlet value, while above, the carrier gas is practically free of water. A drawback of this process is that the kinetics of stripping the unreacted monomers by means of nitrogen are very slow, so that the treatment requires a long residence time for the polymer inside the vessel, and therefore, very bulky vessels should be used.

GB1,178,252 A discloses an apparatus where control of flow of granular solid through downcomer tubes between fluidised beds supported on perforated screens 8 is achieved by gas passing into the bottom of the tubes and up through perforated plates, which gas fluidises the solid in the tubes. The apparatus may be used for the removal of SO2 from flue gases by adsorption on to a catalyst.

US 5,199,184 A discloses a drier for the drying of plastics granules consisting of a vertically arranged tube which simultaneously forms the jacket of the effervescent bed chamber of the crystallizer and of the chamber of the drier. The crystallizer and drier are connected to one another via an aeration surface which is provided with pneumatic means whose permeability decreases in the direction of flow of the granules.

BE680,474 discloses a process for the desiccation of aggregates of wet synthetic materials, consisting of batchwise pre-drying the granulate, via the sticky or plastic state, in a fluid bed dryer without grate and to complete its desiccation continuously at high temperature in a desiccator tank serving simultaneously as an intermediate reservoir.

US5,797,989 discloses an apparatus for the continuous crystallization of polyester material. The apparatus operates to improve the residence behavior of the material and the process. This is achieved by a circular apparatus having a gas inlet and gas outlet and product entry and product outlet, the product entry and product outlet are arranged concentrically and parallel to the axis of the apparatus. A product outlet device is arranged so that it is axially displaceable.

FR1,352,614 discloses a process for drying plastic granules. In the drum dryer, the granule descends in a continuous manner under the action of gravity, and in countercurrent with the gaseous drying fluid injected at the hub of conduits or through grids, so that is dried by contact with this fluid.

US5119570 (A) discloses a process for crystallizing polyester granules in two fluidized beds connected in series and fed into a baffle device for post-comminuting the small agglomerates. The first fluidized bed is a bubbling fluidized bed with mixing characteristics, and the second fluidized bed is a fluidized bed having a piston flow characteristic.

US 4,314,053 and EP 0 341 540 also discloses processes into which polymers are treated with a stream of N₂ enriched with steam, in an amount that the stripping agent is essentially nitrogen. Besides the low kinetics of stripping and the consequent high residence times, limits and drawbacks of the above methods derive from the difficulty in separating the low molecular weight monomers from nitrogen, so that complex, bulky and expensive apparatuses are required in the monomer recovery section of the polymerization plant. Therefore, the recovery and recycle of the unreacted monomers to the polymerization reactor becomes expensive and complex. Furthermore, in case of high boiling unreacted monomers, such as 1-butene, 1-hexene, ethyliden-norbornene, the kinetics is even slower, and therefore the aforementioned problems are exacerbated. Another drawback is given by the fact that the prolonged times of treatment make the above methods not applicable to the finishing of sticky polymers, i.e. with a high tendency to agglomerate, which could cause the formation of polymer chunks inside the vessel.

EP 0 808 850 and EP 1 348 721 disclose methods for reducing the odor development in olefin polymers obtained by polymerization reactions catalyzed by means of metallocene catalysts. According to the teaching of these patents the ligands having a cyclopentadienyl skeleton are sources of odor development. Said ligands can be efficiently removed by a method including a step of contacting the polyolefin with a ligand decomposer, such as water or alcohol, to decompose the residual ligands contained in the polyolefin, and then a step of removing the decomposed ligands by heating said polyolefin in a stream of inert gas, preferably nitrogen. US 4,332,933 describes a method for treating a polymer powder to reduce its content of catalyst residues and volatile compounds. This method comprises flowing a stream of superheated steam at a temperature from 105 to 140°C over the polymer powder, and maintaining the polymer at said temperatures, so as to prevent any steam condensation. A stream of superheated steam is continuously introduced at the bottom of a vessel containing the polymer particles in fluidized conditions. The heat required to increase the temperature of the polymer to the temperature of 105-140°C is supplied to the system by suitable heat exchangers immersed in the fluidized polymer bed. Furthermore, the vessel walls are heated by external jackets in order to prevent the steam condensation. The required high temperatures to avoid the steam condensation and also the presence of heat exchangers protruding inside the polymer bed make this treatment completely not suitable to be applied to the finishing of sticky polymers, which would easily adhere to the internal heat exchangers and to the reactor walls.

All the above mentioned prior art methods include the use of steam/water to some extent in a process for the finishing of a polyolefin, however these methods fail in teaching a drying step where the polymer particles are efficiently and quickly dried before their use in the downstream equipment. When polymer particles are treated with a flow comprising steam and/or water, there is the need to subject the wet polymer to a drying step in order to completely remove the water from the polymer. Otherwise, the wet polymeric granules can cause severe drawbacks in the extrusion equipment: the high extrusion temperatures would inevitably cause the evaporation of the entrapped water with lack of homogeneity and flowability in the molten polymeric mass flowing through the extruder.

The Applicant has now found a process and apparatus capable of drying polymer particles with an improved efficiency, at considerably low residence times of the polymer inside the drying apparatus.

It is therefore a first object of the present invention an apparatus for drying polymer particles by means of an inert gas comprising:
- a first distribution grid at which a first stream of said inert gas is fed;
- a first drying chamber, placed above said first distribution grid, having an annular shape and in which the polymer is maintained in fluidized conditions by said first stream of inert gas;
- a second drying chamber comprising a tubular body running inside said first drying chamber and protruding downwardly below said first distribution grid;
- a second distribution grid, arranged at the bottom part of said second drying chamber, at which a second stream of said inert gas is fed.

The particular design of the drying apparatus of the invention greatly increases the overall efficiency of water removal from polymer granules, thus obtaining a dried polymer even if the residence times of the polymer are short.

A flow of hot inert gas maintains the polymer granules in fluidisation conditions inside the first drying chamber, while the polymer descends in plug flow conditions along the second drying chamber. The presence of two distinct drying chambers and the different flow conditions kept in said two drying chambers allow the overall residence time required to complete the water removal to be greatly reduced, thus reducing the overall size of the drier. The first drying chamber has a higher size than the second drying chamber: establishing polymer fluidization conditions in said first chamber the removal of water from the polymer occurs in a short average residence time, which is a typical feature of driers operating by means of fluidization of the particles to be dried. However, a severe drawback of this type of drier is that the polymer particles move random inside the fluidized polymer bed, so that the respective contact times with the drying gas differ greatly between the particles: accordingly, a little fraction of particles can exit from the drier immediately after their inlet in the apparatus with a low drying effect. For this reason, the efficiency of a drier operating in fluidization conditions is not optimal.

The apparatus of the invention solves the above technical problem with the provision of, downstream the first drying chamber, a second drying chamber in which the polymer particles are not in fluidization conditions, but are forced to descend by gravity in a "plug flow" contacting a second stream of a dry inert gas. The "plug flow" conditions ensure that the contact times with the drying gas are substantially equal for all the polymer particles, so that the water removal can be substantially completed for all the particles, even those not efficiently dried in the first drying chamber.

In view of the above explanation, the drying apparatus of present invention allows to perform the drying of polymer particles with an improved efficiency and in short residence times.

It is therefore a second object of the present invention a process for drying a polymer by means of an inert gas comprising:
- drying the polymer particles in a first drying chamber having an annular shape, where the polymer particles are maintained in fluidized conditions by a first stream of said inert gas;
- further drying the polymer particles in a second drying chamber comprising a tubular body, where the polymer particles descend in a plug flow contacting a second stream of said inert gas.

According to the drying process of the invention, most of the water impregnating the polymer is removed in the first drying chamber operating in fluidization conditions. In particular, a weight fraction from about 0.8 to about 0.95 of the total water is removed in the first drying chamber. The remaining part of water is removed from the polymer in the second drying chamber operating in a "plug flow".

The fluidization conditions established in the first chamber allows to remove most of the water from the polymer with a very short residence time: the average residence time in the annular chamber generally ranges from 1 to 6 minutes, preferably from 2 to 5 minutes.

On the other hand, the tubular body forming the second drying chamber is designed with a reduced volume, so that, even if "plug flow conditions" are established, the residence time of the polymer results similarly low: the average residence time in the second drying chamber ranges from 2 to 15 minutes, preferably from 5 to 10 minutes.

Therefore, the polymer has an overall residence time in the drying apparatus of the invention comprised between about 3 and about 20 min, preferably between 5 and 15 minutes. Moreover, owing to the particular flow conditions of the polymer, it is possible to avoid channelling, ensuring a complete removal of water from the polymer.

A typical industrial application of the process and apparatus of instant invention is the drying of polymer particles coming from the finishing section of a polymerization plant, particularly from a treatment of polymer steaming, according to which the produced polyolefin is countercurrently contacted with a stream of steam in order to remove away the unreacted monomers dissolved in the polymer particles. Generally, the polymer particles come from steaming at a temperature ranging from 85°C to 110°C. Once introduced in the drying apparatus the water layer surrounding the granules of polymer is evaporated by the flow of hot dry gas: during the drying process the polymer is therefore subjected to cooling, since the water evaporation absorbs heat from the polymer particles. Therefore, at the end of the drying process the polymer has a lower temperature than at the inlet into the drier.

A stream of dry inert gas is used in the process of the invention at a temperature comprised between about 85°C and 115°C, said temperature being selected taking into account the particular polymer treated, so as to avoid any softening of the polymer, and subsequently any obstruction in the drier. Preferably nitrogen is used as the dry inert gas.

The amount of dry inert gas fed to the annular chamber generally represents from 70 to 95% by volume of the total feed of inert gas to the drying apparatus.

A stream of nitrogen enriched with steam is discharged as a by-product from the drying apparatus of the invention. Said impure nitrogen is subjected to compression and successive cooling to condensate water, and after the condensate has been separated off in a liquid separator, the purified nitrogen is heated in a heat exchanger at the suitable temperature and again reintroduced at the bottom of the drier, thus forming a hot nitrogen closed loop. Accordingly, the separation of the removed water from the nitrogen is technically simple and does not require expensive separation steps.

The polymer particles coming from the drying process of the invention contain water in a negligible amount and therefore may be transferred, without any risk, to the successive downstream steps, such as extrusion and pelletization.

The invention will be better understood and carried into effect with reference to the attached drawings, in which an embodiment of the invention is shown by way of a non-limiting example, in which:
Figure 1 is a schematic partial view of a process for the finishing of polyolefin granules discharged from a polymerization reactor wherein, after the steaming of the polyolefin, the drying process and apparatus of present invention are used;
Figure 2 is a schematic front view of the drying apparatus according to the present invention;
Figure 3 is a perspective view of the internals of the drying apparatus of the invention.

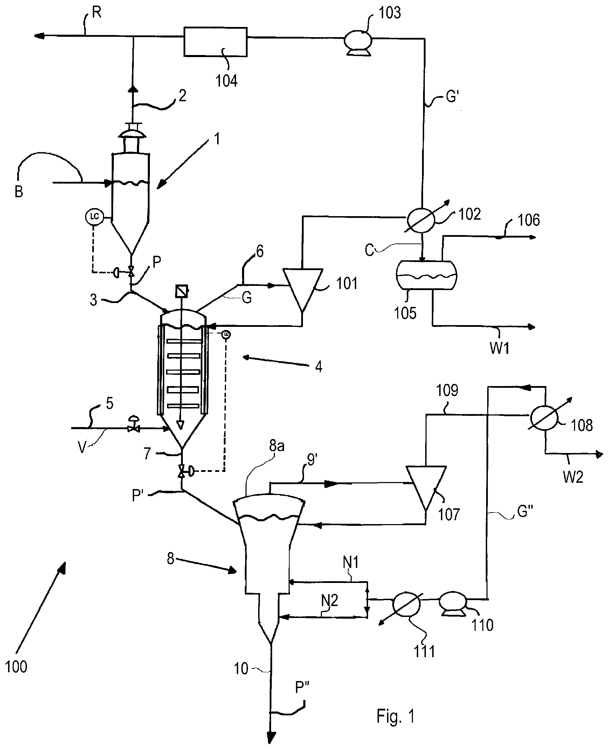

By way of an example, reference is made in Fig. 1 to a plant for producing polyolefins, such as propylene homopolymers or copolymers. In such plants the polymerization reaction may be performed in a single or in multiple step, or in any one of the known methods, for example as described in EP 517 183.

With reference to Figure 1, there are shown finishing apparatuses 100 used in a finishing zone of a plant for producing polymers, the finishing apparatuses comprising a flash chamber 1, a first vessel 4 in which the polymer is treated with saturated steam, a second vessel 8 in which the polymer is dried with dry nitrogen.

A product B containing polymer granules is discharged from a polymerization process performed in the gas phase, or alternatively, in the liquid phase.

The product B comprises polymer granules together with the unreacted monomers and catalysts residues, which must be removed from the polymer using the finishing process of the invention. The polymer granules have preferably a spherical shape, with dimensions of about 0.3-4 mm, great roughness, and therefore high specific surface.

If crystalline polymers are treated in the flash chamber 1, a temperature of about 100-110°C may be reached, on the other hand if very sticky polymers are treated, the temperature may be maintained at about 60-90°C. In any case, the temperature in the flash chamber 1 is kept at values such to avoid the softening of the polymer powder. Owing to the above mentioned operative conditions, a part of the gaseous phase present in the product B, mainly the unreacted monomers, are volatilized from the solid polymer.

The gases separated from the product B leave the flash chamber 1 through the gas line 2 from the upper zone of the chamber 1, and are recycled by the recycle line R to the polymerization reactor after compression, whereas the polymer P leaves the bottom of the flash chamber 1 via the feed line 3 and is fed at the top of a steamer 4 to carry out the steaming step (1) of present invention. At the bottom of the steamer 4 the saturated steam V is fed through the steam line 5.

Volatile gaseous compounds G, released from the polymer P, are extracted from the head of the steamer 4 via line 6. A purified polymer P' is discharged from the bottom of the steamer 4.

The gaseous compounds G contain steam, unreacted monomers, and high boiling catalyst components coming from the catalyst system. The separation of the gaseous components from the steam is simple and efficient: it may be carried out according to known methods, and does not require bulky or complex apparatuses. Such separation allows, from one hand, the recover and recycle of the unreacted monomers to the polymerization reactor and, on the other hand, to obtain water.

The stream G is firstly fed to a cyclone separator 101 for separating therefrom fine polymer particles entrained with the gaseous stream G. Said fine particles are reintroduced into the steamer 4, whilst the gaseous compounds are fed to a condenser 102, in which the gaseous compounds are cooled to cause the condensation of the steam and heavier hydrocarbons, so as to obtain a gaseous fraction G' and a condensed fraction C.

The gaseous fraction G' is fed to a compressor 103 and then to a drier 104 and thereafter mixed with the gas line 2 coming from the flash chamber 1, and hence recycled back to the polymerization reactor through the recycle line R.

The condensed fraction C is fed to a gravity separator 105 in which the high molecular weight hydrocarbons 106 are separated from the aqueous phase W1. The aqueous phase W1 can be discharged in a water reservoir after being purified from the presence of residual hydrocarbons.

The polymer P' withdrawn from the bottom of the steamer 4 is fed via line 7 to the head portion 8a of a drier 8, whilst a flow of dry inert gas, preferably dry nitrogen, is fed to the bottom portion of the drier 8 via lines N1 and N2. The dry inert gas allows to remove from the polymer particles the steam previously condensed on the polymer granules in the steamer 4. A dried polymer P" is discharged from the bottom of the drier 8 through line 10. From the upper zone of the drier 8 a gaseous stream 9' is obtained, said gaseous stream containing mainly nitrogen, together with steam.

The gaseous stream 9' is then fed to a further cyclone separator 107, in which the fine particles are separated from the gas: said fines are recycled to the top of the drier 8, whilst the gaseous phase 109 is fed to a further condenser 108, in which the steam is condensed and separated as water W2 from the nitrogen. The obtained stream of water W2 may be discharged in the water reservoir, while nitrogen is sent via line G" to the compressor 110, heated by means of heat exchanger 111, and then recycled via lines N1 and N2 at the bottom part of the drier 8.

The polymer P" discharged from the drier 8 is free from water, volatile compounds and catalyst residues, has a high degree of purity, and may be processed in subsequent processing operations. The polymer P" is almost at the same temperature of the product B fed to the finishing process, and may be used in downstream processes without being subjected to any other treatment.

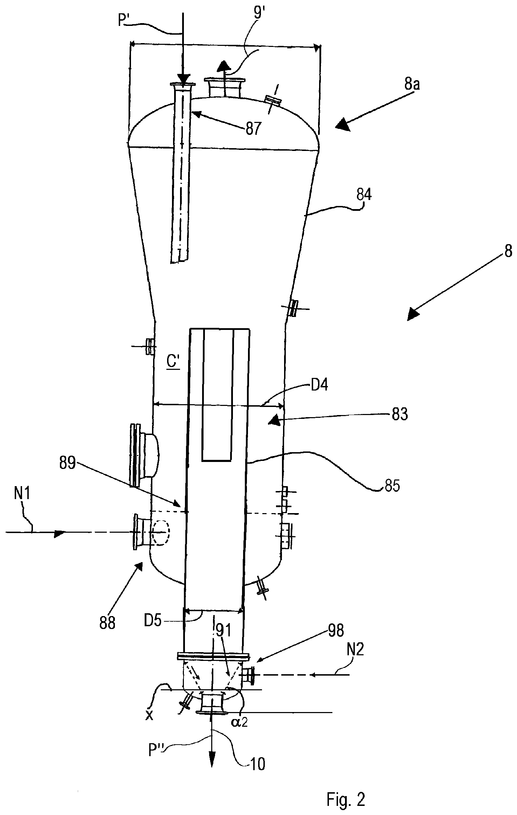

Fig. 2 shows a schematic front view of the drying apparatus of the invention. The drier 8 is provided with a head portion 8a, a first drying chamber 83 having a substantially annular shape, a velocity reduction zone 84 interposed between the head portion 8a and the first drying chamber 83, and a tubular body 85 with a diameter D5 lower than the diameter D4 of the first drying chamber 83.

The polymer particles are maintained inside the first drying chamber 83 in fluidization conditions by the upwardly flow of dry nitrogen fed to the bottom of the drier 8. The velocity reduction zone 84 is shaped so as to diverge from the first drying chamber 83 to the head portion 8a: this allows to reduce the velocity of the fluidizing gas, thus minimizing the fraction of fines which may be entrained by the gas through the outlet 9'.

The polymer particles P', enriched with condensed steam in the steamer 4 of Fig 1, are fed to the drier 8 by means of a long feed conduit 87, which protrudes inside the velocity reduction zone 84 of the drier 8. The feed conduit 87 is particularly prolonged in order to convey the polymer particles directly in the middle region of the first drying chamber 83, thus minimizing the amount of solid particles eventually entrained with the upward flow of gas exiting through the gas outlet 9'.

A first stream N₁ of nitrogen, as the drying gas, is fed to the drier 8 at an inlet 88 arranged at the bottom of the first drying chamber 83. Said first stream of nitrogen is distributed in the chamber 83 through a first distribution grid 89 having an annular shape.

A second stream N₂ of dry nitrogen is fed at the inlet 98 arranged at the bottom of the tubular body 85 and is distributed in the tubular body 85 through a second distribution grid 91.

The distribution grid 91 is tilted, with respect to the horizontal direction x, of angle α₂ greater than the rest angle Φ of the dried polymer: this allows the descent of the polymer P' due to gravity and prevents obstructions in the bottom of the tubular body 85. Both the first distribution grid 89 and the second distribution grid 91 are provided with a plurality of distribution holes for distributing respectively the first stream N1 and the second stream N2 of dry nitrogen in the drier 8.

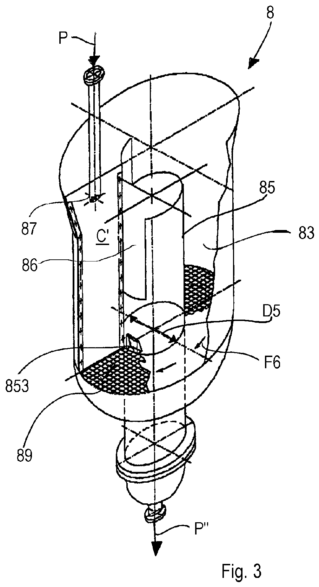

As clearly shown in Figure 3, which is a perspective view of the internals of the drier 8, the tubular body 85 has a substantially cylindrical shape and is concentric to the first drying chamber 83.

The arrangement of the tubular body inside the drier 8 allow two distinct drying chambers to be identified: a first drying chamber represented by the annular chamber 83 and a second drying chamber arranged inside the tubular body 85. The upper part of the tubular body 85 extends above the first distribution grid 89, while the lower part of the tubular body 85 protrudes downwardly below the first distribution grid 89.

The second drying chamber is arranged downstream the first drying chamber, i.e. the polymer particles flow firstly in the annular chamber 83 and successively along the tubular body 85. In the first drying chamber 83 the polymer is dried while is subjected to fluidization conditions by the upward flow of dry nitrogen coming through the first distribution grid 89. In the second drying chamber, i.e inside the tubular body 85, the polymer particles flow downward substantially in plug flow conditions encountering the second stream of dry nitrogen fed via the inlet 98 in Fig. 2.

The polymer entering the drier 8 fills the annular chamber 83 up to a certain level, that is kept almost constant, forming a fluidized polymer bed C' that is fluidized by the flow of nitrogen, which diffuses homogeneously into the polymer bed C', so contacting almost each granule of polymer and keeping the polymer in fluidization in the annular chamber 83.

Owing to the particular orientation and distribution of the holes in the first distribution grid 89 the flow of nitrogen flows upward with a cyclonic motion, as indicated by the arrows F6 in Figure 3, so spiralling up into the annular chamber 83. A notching 86 is provided in the upper end of the tubular body 85. Due to turbulent, random motion at which the polymer particles are subjected, some of them enter the notching 86, thus passing from the annular chamber 83 into the tubular body 85. Inside the tubular body 85 the polymer is not more subjected to fluidization conditions, so that it can fall downward in a plug flow.

The tubular body 85 is also provided with an opening 853 placed just above the first distribution grid 89, and having the function of emptying the annular chamber 83, in case of emergency stop.

The fluidization conditions in the annular chamber 83 allow most of the water condensed on the polymer granules to be removed, whilst the plug flow conditions in the tubular body 85 allows to complete the polymer drying with a high efficiency. This implies that, after short residence times, a dried polymer P" can be discharged from the outlet 10 of the drier 8.

The following examples will further illustrate the present invention without limiting its scope.

### EXAMPLES

### Example 1

### Polymerization conditions

Polypropylene is produced by means of slurry polymerization of the liquid monomer in a loop reactor.

A Ziegler-Natta catalyst is used as the polymerization catalyst, comprising:
- a titanium solid catalyst component prepared with the procedure described in WO 00/63261, Example 10, according to which diethyl 2,3-diisopropyl-succinate is used as an internal donor compound;
- triethylaluminium (TEAL) as a cocatalyst;
- dicyclopentyldimethoxysilane as an external donor.

Propylene is polymerized in the loop reactor using H₂ as the molecular weight regulator. No comonomer is fed to this reactor. Make-up propylene and hydrogen were continuously fed to the loop reactor. The polymerization of propylene is carried out at a temperature of 70°C and a pressure of 34 absolute bar.

The polypropylene slurry, continuously discharged from the loop reactor, is forced to flow inside a jacketed pipe wherein it is heated up to reach a temperature of 85°C with consequent evaporation of the liquid phase. Successively the obtained stream of polypropylene and evaporated monomer is introduced in a flash tank (reference 1 in Fig.1), where the evaporated monomer is separated from the polymer particles.

### Steaming step

30000 Kg/h of polypropylene are continuously discharged from the bottom of the flash tank 1 and are subjected to steaming in a steamer (reference 4 in Fig. 1).

The temperature of polymer particles at the inlet of the steamer 4 is of about 70°C. Saturated steam is fed mostly at the bottom of the steamer 4 with a total flow rate equal to 1800 Kg/h, corresponding to 60 Kg of steam per 1000 kg of polyolefin to be treated.

The polymer particles fall down by gravity along the steamer, thus contacting in a counter current the upward flow of saturated steam. The operative conditions are such to maintain in the steamer a temperature of 105°C and a pressure of 1.2 absolute bar. The average residence time of the polymer in the steamer is of 20 minutes. Under the above indicated operative conditions, about 1000 kg/h of steam are subjected to condensation, thus generating water layers around the polyolefin particles. The remaining amount of saturated steam acts as the stripping agent and is discharged from the top of the steamer 4.

The polypropylene particles withdrawn from the bottom of the steamer are conveyed to the drying apparatus of the present invention.

### Drying step

With reference to Figs. 2 and 3, the polypropylene particles at a temperature of 105°C enter the first drying chamber 83 of the drier 8 via the feed conduit 87. Inside the first drying chamber 83 the polymer particles are maintained in fluidization conditions by an upward flow of dry nitrogen. About 13000 m³/h of dry nitrogen at a temperature of 110°C are fed via line N1 to fluidization grid 89, which is placed at the bottom part of the drying chamber 83. About 2000 m³/h of dry nitrogen at a temperature of 110°C are fed at the inlet 98, arranged at the bottom of the tubular body 85, and are distributed in the tubular body 85 through the distribution grid 91. In the second drying chamber, i.e inside the tubular body 85, the polymer particles flow downward substantially in plug flow conditions encountering this second stream of dry nitrogen.

The residence time of the polymer in the first drying chamber 83 is of only 2 minutes, while the polymer residence time inside the second drying chamber 85 is of 10 minutes.

The contact with dry nitrogen causes the evaporation of the water surrounding the polyolefin particles, which is also causing the cooling of the polymer particles. In fact, the polyolefin temperature at the outlet of the drier 8 is lowered to the value of 78°C.

From the top of the drier 8 a stream of nitrogen enriched with steam is obtained, which is subjected to condensation to separate the steam from nitrogen. The separated nitrogen is then compressed, heated in a heat exchanger and again reintroduced at the bottom of the drier 8 via feeding lines N1 and N2, thus forming a hot nitrogen closed loop.

A completely dried polyolefin is discharged from the outlet 10 of the drying apparatus of present invention.

### Example 2

### Polymerization conditions

A propylene/ethylene/1-butene copolymer is produced by means of slurry polymerization of the liquid monomers in a loop reactor. The same Ziegler-Natta catalyst of Example 1 is used. Propylene is the main monomer, while ethylene and 1-butene are fed to the loop reactor, so as to obtain a final propylene copolymer containing 2.5% by weight of ethylene and 4.8% by weight of 1-butene. The slurry polymerization in the loop reactor is carried out at a temperature of 62°C and a pressure of 34 absolute bar.

The copolymer slurry, continuously discharged from the loop reactor, is forced to flow inside a jacketed pipe wherein it is heated up to reach a temperature of 78°C with consequent evaporation of the liquid phase. Successively the obtained stream of polypropylene and evaporated monomers is introduced in a flash tank, where the evaporated monomers are separated from the polymer particles.

### Steaming step a)

20000 Kg/h of copolymer are continuously discharged from the bottom of the flash tank and are conveyed to the top of the steamer 4.

The temperature of the polyolefin entering the steamer is of about 65°C. The total flow rate of saturated steam fed to the steamer 4 is equal to 1800 Kg/h, corresponding to 90 Kg of steam per 1000 kg of polyolefin to be treated.

The polymer particles fall down by gravity along the steamer, thus contacting in a counter current the flow of saturated steam. The operative conditions are such to maintain in the steamer a temperature of 105°C and a pressure of 1.2 absolute bar. The average residence time of the polymer in the steamer is of 30 minutes.

Under the above indicated operative conditions, about 860 kg/h of steam are subjected to condensation, thus generating water layers around the polyolefin particles. The remaining amount of saturated steam acts as the stripping agent and is discharged from the top of the steamer 4. The polyolefin particles withdrawn from the bottom of the steamer are introduced in the drying apparatus of present invention.

### Drying step b)

Polypropylene particles at a temperature of 105°C enter the first drying chamber 83 of the drier 8 via the feed conduit 87. Inside the first drying chamber 83 the polymer particles are maintained in fluidization conditions by an upward flow of dry nitrogen. About 11700 m³/h of dry nitrogen at a temperature of 110°C are fed via line N1 to fluidization grid 89, placed at the bottom part of the drying chamber 83.

About 1300 m³/h of dry nitrogen at a temperature of 110°C are fed at the inlet 98, arranged at the bottom of the tubular body 85, and are distributed in the tubular body 85 through the distribution grid 91. In the second drying chamber the polymer particles flow downward substantially in plug flow conditions encountering this second stream of dry nitrogen.

The residence time of the polymer in the first drying chamber 83 is of only 3 minutes, while the polymer residence time inside the second drying chamber 85 is of 14 minutes.

The contact with dry nitrogen causes the evaporation of the water surrounding the polyolefin particles, which is also causing the cooling of the polymer particles. In fact, the polyolefin temperature at the outlet of the drier 8 is lowered to the value of 72°C.

From the top of the drier 8 a stream of nitrogen enriched with steam is obtained, which is subjected to condensation to separate the steam from nitrogen. The separated nitrogen is then compressed, heated in a heat exchanger and again reintroduced at the bottom of the drier 8 via feeding lines N1 and N2, thus forming a hot nitrogen closed loop.

A completely dried polyolefin is discharged from the outlet 10 of the drying apparatus of present invention.

## Claims

1. An apparatus for drying polymer particles by means of an inert gas comprising:
- a first distribution grid (89) configured to receive a first stream of said inert gas;
- a first drying chamber (83), placed above said first distribution grid (89), having an annular shape, suitable for maintaining the polymer in fluidized conditions by said first stream of inert gas;
- a second drying chamber running inside said first drying chamber (83) and protruding downwardly below said first distribution grid (89), wherein said second drying chamber is concentric to said first drying chamber (83); **characterized in that**
- the second drying chamber is formed by a tubular body (85), wherein a notching (86) is provided in the upper end of said tubular body,
- the apparatus further comprises a second distribution grid (91), arranged at the bottom part of said second drying chamber, configured to receive a second stream of said inert gas.

2. The apparatus according to claim 1 further comprising a velocity reduction zone (84) arranged above said first drying chamber (83).

3. The appartus according to claim 1 wherein the holes of said first distribution grid (89) are oriented so as to make spiralling up the stream of inert gas in said first drying chamber (83).

4. The apparatus according to claim 1, wherein said second distribution grid (91) is tilted, with respect to the horizontal direction, of an angle α2 greater than the rest angle Φ of the dried polymer.

5. A process for drying a polymer by means of an inert gas comprising:
- drying the polymer particles in a first drying chamber (83) having an annular shape, where the polymer particles are maintained in fluidized conditions by a first stream of said inert gas;
- further drying the polymer particles in a second drying chamber where the polymer particles descend in a plug flow contacting a second stream of said inert gas; wherein said second drying chamber is concentric to said first drying chamber (83), **characterized in that**
- the second drying chamber is formed by a tubular body (85), wherein a notching (86) is provided in the upper end of said tubular body (85).

6. The process according to claim 5, where a weight fraction comprised from 0.8 to 0.95 of the total water present on said polymer is removed in said first drying chamber (83).

7. The process according to claim 5, wherein the average residence time of the polymer in said first drying chamber (83) ranges from 1 to 6 minutes.

8. The process according to claim 5, wherein the average residence time of the polymer in said second drying chamber ranges from 2 to 15 minutes.

9. The process according to claim 5, wherein the polymer to be dried comes from a treatment of polymer steaming.

10. The process according to claim 5, wherein said inert gas is dry nitrogen at a temperature ranging from 85°C to 115°C.

11. The process according to claim 5, wherein said first stream of inert gas fed to said first drying chamber (83) is from 70 to 95% by weight of the total feed of said inert gas.

12. The process according to claim 5, wherein said first stream of inert gas flows upward with a cyclonic motion spiralling up into said first annular chamber (83).

## Patentansprüche

1. Vorrichtung zum Trocknen von Polymerpartikeln mithilfe von Inertgas, umfassend:
- ein erstes Verteilungsgitter (89), das ausgestaltet ist, um einen ersten Strom des Inertgases zu empfangen;
- eine erste Trocknungskammer (83), die oberhalb des ersten Verteilungsgitters (89) platziert ist, mit einer Ringform, die geeignet ist, um das Polymer mithilfe des ersten Stroms des Inertgases in verwirbeltem Zustand zu halten;
- eine zweite Trocknungskammer, die im Inneren der ersten Trocknungskammer (83) läuft und unterhalb des ersten Verteilungsgitters (89) nach unten ragt, wobei die zweite Trocknungskammer zu der ersten Trocknungskammer (83) konzentrisch ist; **dadurch gekennzeichnet, dass**
- die zweite Trocknungskammer durch einen Rohrkörper (85) gebildet ist, wobei in dem oberen Ende des Rohrkörpers eine Kerbung (86) bereitgestellt wird,
- die Vorrichtung ferner ein zweites Verteilungsgitter (91) umfasst, das am Unterteil der zweiten Trocknungskammer angeordnet ist und ausgestaltet ist, um einen zweiten Strom des Inertgases zu empfangen.

2. Vorrichtung nach Anspruch 1, ferner umfassend eine Geschwindigkeitsreduktionszone (84), die oberhalb der ersten Trocknungskammer (83) angeordnet ist.

3. Vorrichtung nach Anspruch 1, wobei die Löcher des ersten Verteilungsgitters (89) so orientiert sind, dass sie Spiralbildung des Stroms des Inertgases in der ersten Trocknungskammer (83) bewirken.

4. Vorrichtung nach Anspruch 1, wobei das zweite Verteilungsgitter (91) in Bezug auf die horizontale Richtung in einem Winkel a2 gekippt ist, der größer als der Ruhewinkel Φ des getrockneten Polymers ist.

5. Verfahren zum Trocknen von Polymer mithilfe von Inertgas, umfassend:
- Trocknen der Polymerpartikel in einer ersten Trocknungskammer (83) mit einer Ringform, wobei die Polymerpartikel durch einen ersten Strom des Inertgases in einem verwirbelten Zustand gehalten werden;
- weiteres Trocknen der Polymerpartikel in einer zweiten Trocknungskammer, wobei die Polymerpartikel in einer Pfropfenströmung absteigen und einen zweiten Strom des Inertgases kontaktieren, wobei die zweite Trocknungskammer konzentrisch zu der ersten Trocknungskammer (83) ist,
**dadurch gekennzeichnet, dass**
- die zweite Trocknungskammer durch einen Rohrkörper (85) gebildet ist, wobei in dem oberen Ende des Rohrkörpers (85) eine Kerbung (86) bereitgestellt wird.

6. Verfahren nach Anspruch 5, wobei eine Gewichtsfraktion, die 0,8 bis 0,95 des gesamten auf dem Polymer vorhandenen Wassers beträgt, in der ersten Trocknungskammer (83) entfernt wird.

7. Verfahren nach Anspruch 5, wobei die durchschnittliche Verweilzeit des Polymers in der ersten Trocknungskammer (83) im Bereich von 1 bis 6 Minuten liegt.

8. Verfahren nach Anspruch 5, wobei die durchschnittliche Verweilzeit des Polymers in der zweiten Trocknungskammer im Bereich von 2 bis 15 Minuten liegt.

9. Verfahren nach Anspruch 5, wobei das zu trocknende Polymer aus einer Behandlung des Polymers mit Wasserdampf kommt.

10. Verfahren nach Anspruch 5, wobei das Inertgas trockener Stickstoff mit einer Temperatur im Bereich von 85 °C bis 115 °C ist.

11. Verfahren nach Anspruch 5, wobei der erste Strom des in die erste Trocknungskammer (83) eingespeisten Inertgases 70 bis 95 Gew.% der gesamten Einspeisung des Inertgases ist.

12. Verfahren nach Anspruch 5, wobei der erste Strom des Inertgases mit einer zyklonartigen Bewegung spiralförmig aufwärts in die erste ringförmige Kammer (83) fließt.

## Revendications

1. Appareil pour sécher des particules de polymère au moyen d'un gaz inerte comprenant :
- une première grille de distribution (89) conçue pour recevoir un premier flux dudit gaz inerte ;
- une première chambre de séchage (83), placée au-dessus de ladite première grille de distribution (89), possédant une forme annulaire, apte à maintenir le polymère dans des conditions fluidisées par ledit premier flux de gaz inerte ;
- une deuxième chambre de séchage s'étendant à l'intérieur de ladite première chambre de séchage (83) et faisant saillie vers le bas sous ladite première grille de distribution (89), ladite deuxième chambre de séchage étant concentrique par rapport à ladite première chambre de séchage (83) ;
**caractérisé en ce que**
- la deuxième chambre de séchage est formée par un corps tubulaire (85), une encoche (86) étant située dans l'extrémité supérieure dudit corps tubulaire,
- l'appareil comprend en outre une deuxième grille de distribution (91), agencée au niveau de la partie inférieure de ladite deuxième chambre de séchage, conçue pour recevoir un deuxième flux dudit gaz inerte.

2. Appareil selon la revendication 1, comprenant en outre une zone de réduction de vitesse (84) disposée au-dessus de ladite première chambre de séchage (83).

3. Appareil selon la revendication 1, les trous de ladite première grille de distribution (89) étant orientés de manière à faire monter en spirale le flux de gaz inerte dans ladite première chambre de séchage (83).

4. Appareil selon la revendication 1, ladite deuxième grille de distribution (91) étant inclinée, par rapport à la direction horizontale, d'un angle α2 supérieur à l'angle de repos (Φ) du polymère séché.

5. Procédé de séchage d'un polymère au moyen d'un gaz inerte comprenant :
- le séchage des particules de polymère dans une première chambre de séchage (83) possédant une forme annulaire, les particules de polymère étant maintenues dans des conditions fluidisées par un premier flux dudit gaz inerte ;
- le séchage supplémentaire des particules de polymère dans une deuxième chambre de séchage où les particules de polymère descendent dans un écoulement piston en contact avec un deuxième flux dudit gaz inerte ; ladite deuxième chambre de séchage étant concentrique par rapport à ladite première chambre de séchage (83),
**caractérisé en ce que**
- la deuxième chambre de séchage est formée par un corps tubulaire (85), une encoche (86) étant située dans l'extrémité supérieure dudit corps tubulaire (85).

6. Procédé selon la revendication 5, une fraction pondérale comprise entre 0,8 et 0,95 de la totalité de l'eau présente sur ledit polymère étant éliminée dans ladite première chambre de séchage (83).

7. Procédé selon la revendication 5, le temps de séjour moyen du polymère dans ladite première chambre de séchage (83) étant de 1 à 6 minutes.

8. Procédé selon la revendication 5, le temps de séjour moyen du polymère dans ladite deuxième chambre de séchage étant de 2 à 15 minutes.

9. Procédé selon la revendication 5, le polymère à sécher provenant d'un traitement à la vapeur de polymère.

10. Procédé selon la revendication 5, ledit gaz inerte étant de l'azote sec à une température de 85°C à 115°C.

11. Procédé selon la revendication 5, ledit premier flux de gaz inerte introduit dans ladite première chambre de séchage (83) représentant 70 à 95 % en poids de la charge totale dudit gaz inerte.

12. Procédé selon la revendication 5, ledit premier flux de gaz inerte s'écoulant vers le haut dans un mouvement cyclonique ascendant en spirale jusque dans ladite première chambre annulaire (83).
